**Europäisches Patentamt**

**European Patent Office**

**Office européen des brevets**

(19)

(11) Publication number: **0 204 096**
**A1**

(12) # EUROPEAN PATENT APPLICATION

(21) Application number: **86104451.9**

(22) Date of filing: **01.04.86**

(51) Int. Cl.⁴: **G 21 C 7/16**
**F 15 B 11/12**

(30) Priority: **01.04.85 CN 85100042**

(43) Date of publication of application:
**10.12.86 Bulletin 86/50**

(84) Designated Contracting States:
**CH DE FR GB LI**

(71) Applicant: **Qinghua University**
**Tsinghua Yuan Haidian District**
**Beijing(CN)**

(72) Inventor: **Yuanqiang, Wu c/o Inst. of Nuclear Energy**
**Techn.**
**Qinghua University Haidian District**
**Beijing(CN)**

(72) Inventor: **Dashong, Wang c/o Inst. of Nuclear Energy**
**Techn.**
**Qinghua University Haidian District**
**Beijing(CN)**

(72) Inventor: **Yingzhong, Lu c/o Inst. of Nuclear Energy**
**Techn.**
**Qinghua University Haidian District**
**Beijing(CN)**

(72) Inventor: **Yuedong, Hu c/o Inst. of Nuclear Energy**
**Techn.**
**Qinghua University Haidian District**
**Beijing(CN)**

(72) Inventor: **Nianzu, Yang c/o Inst. of Nuclear Energy**
**Techn.**
**Qinghua University Haidian District**
**Beijing(CN)**

(74) Representative: **Patentanwälte Beetz sen. - Beetz jun.**
**Timpe - Siegfried - Schmitt-Fumian**
**Steinsdorfstrasse 10**
**D-8000 München 22(DE)**

(54) **The hydraulic step cylinder of orifice type used for driving of the control rod on reactor.**

(57) The hydraulic step cylinder of orifice type is a new type of driving device of the control rod; it is fitted for water power reactor. In the cylinder the water – reactor coolant – is used as working medium, the drag between piston (1, 2) and cylinder (3) is changed with a stagger of the orifices (11, 21, 31) which are on them, the piston (1, 2) can be moved step by step by controlling of the flow. It has no sealing problems of too high pressure which are faced in usual driving devices of control rod on power reactor, so it can be put into the reactor vessel. Its properties are better than the "hydraulic control-rod" of KWU, F.R.G. (the groove type). It is a simpler and cheaper device of the control rod of a power reactor. It will play an important part in reducing the reactor scale and in simplifying the reactor structure.

FIG . 4

A-A -section

## The Hydraulic Step Cylinder of Orifice Type Used for Driving of the Control Rod on Reactor

This invention is a hydraulic step cylinder for driving the control rod of a reactor. It is based on ≤ 500 MW district heating reactor (Kraftwerk Union, Federal Republic of Germany) for which a new type of hydraulic control rod used for heating the reactor was investigated by KWU. In this device the water - reactor coolant - is used as the working medium, a pump is used to produce the pressure flow, the flow pushes the piston and the control rod and moves them step by step. Its principle is as follows:

The pressure flow passes the gap between piston and cylinder. In the piston and the cylinder there are some grooves. The drag of the gap changes with the relative displacement between piston and cylinder, so that the position of the piston can be controlled step by step by controlling the flow.

But in the hydraulic control rod of KWU because of the drag property of the grooves the step length is rather large, the property of regulation is not good, the water consumption is quite considerable. If the electromagnetic valve has an accident, the control rod may be withdrawn out of the core, then the reactor may be over-critical and have a serious accident.

The object of the invention is to provide a new type of hydraulic step cylinder in which the step length is smaller, the property of regulation is excellent, the water consumption is reduced, and which will be more reliable and safer.

This object is solved by the features of claim 1. The hydraulic step cylinder consists of a cylinder and a hollow piston, there are some orifices in them. At the fixed cylinder there are more than two lines of orifices. Each line of orifices is arranged in a straight line which is parallel to the axis of the cylinder. Crosswise, these orifices are arranged in rows. In each row the orifices are arranged evenly on a circle or plane which is perpendicular to the axis of the cylinder. The distance between two near rows or planes is the step length. There is one row of orifices in the piston, the axes of these orifices must coincide with the axes of corresponding orifices of the cylinder. The shape of the orifices in the piston can be round or rectangular or any other shape. The axial dimension of the orifices of the cylinder is longer than the axial dimension of the orifices of the piston. The pressure water flows into the piston, passes the orifices of the piston and the cylinder, then flows out of the cylinder. Their drags are changed with relative displacement between piston and cylinder. So this invention is called "orifice type of hydraulic step cylinder".

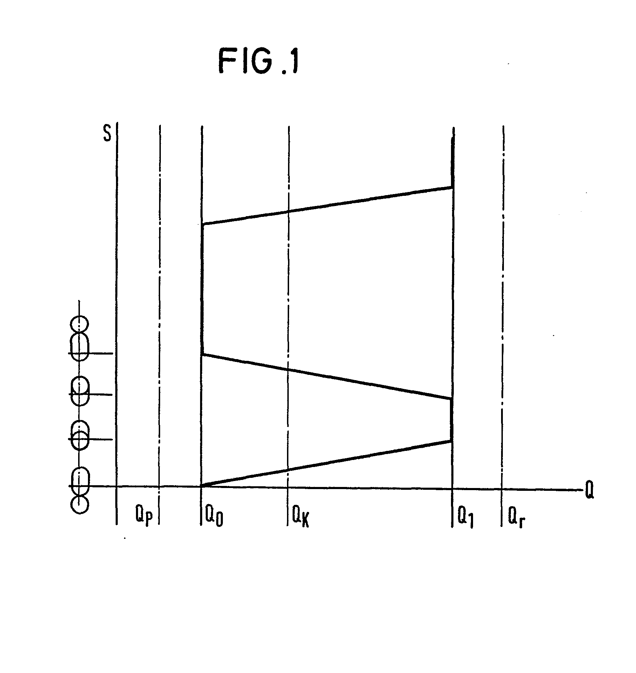

The curve of the balance flow in steady state is shown in Fig. 1. In Fig. 1 the abscissa Q is the balance flow in steady state, the ordinate S is the relative position between the orifices of cylinder and piston, the four figures on the left of the axis S are diagrams in which the relative positions between the orifices of cylinder and piston are shown. Some special points on the abscissa are as follows: $Q_0$ is the lowest balance flow, $Q_1$ is the highest balance flow, $Q_r$ is the lift flow, $Q_p$ is the fall flow.

When the pressure of the cylinder is constant, the orifices of cylinder and piston are aligned or staggered, the drag will change acutely, and the balance flow will also change acutely (from $Q_1$ to $Q_0$). Under the keep-flow $Q_k$ ($Q_0 < Q_k < Q_1$) the piston stands in a fixed balancing position, and at the same time the orifices of cylinder and piston overlap partially.

When the piston moves upward and past the balancing position, the keep-flow is lower than the balancing flow at that point, so the pressure of the cylinder drops, then the piston falls and returns to the balancing position. On the contrary, when the piston position is lower than the balancing position, the keep-flow is higher than the balancing flow at that point, then the pressure of the cylinder rises and the piston is raised to the balancing position. When a pulse of lift flow $Q_r$ ($Q_r > Q_1$) is given to the cylinder, the piston moves upward and past a row of orifices, then the flow returns to keep-flow $Q_k$ so that the piston will stay in a new balancing position above a row of orifices; this is the lift operation. When a pulse of fall-flow $Q_p$ ($Q_p < Q_0$) is given to the cylinder, the piston moves down and pushes the next row of orifices down, then the flow returns to keep-flow $Q_k$, so the piston will stay in a new balancing position on the next row; this is the fall operation.

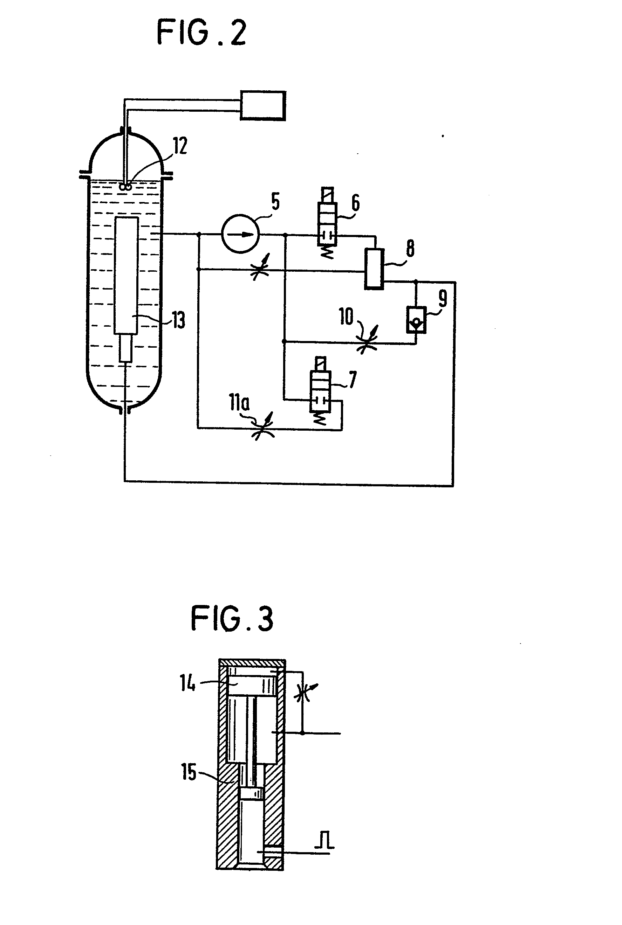

Fig. 2 is a diagram of the flow control system, in which 5 is a pump, 6 is an electromagnetic lift valve, 7 is an electromagnetic fall valve, 8 is a pulse valve, 9 is a retaining valve, 10, 11a are throttle valves, 12 is an ultrasonic system used for position determining of the control rod, 13 is the container of the reactor.

The flow is controlled by means of the flow control system shown in Fig. 2. The water which comes from the reactor container is forced by the pump 5 into the control system which consists of the electromagnetic valves 6, 7, the throttle valves 10, 11a, the retaining valve 9, the pulse valve 8; then it is injected into the hydraulic step-cylinder. To ensure that the piston moves up one step in every lift action in order to avoid unexpected reactivity introduction into the core, the pulse of lift flow is produced by a pulse valve. Fig. 3 is a diagram of the pulse valve, in which 14 indicates a piston, 15 indicates a cylinder. The pulse valve consists of a cylinder which consists of a large cylinder and a small cylinder and a piston which consists of two corresponding pistons.

When the electromagnetic valve 6 is opened the pressure water is injected into the large cylinder and pushes the large piston, then the water which is in the small cylinder is pushed into the main tube (Fig. 2). When the valve 6 is closed, the water which is in the main tube flows into the small cylinder and pushes the small piston to the starting position. Thus in every action of the valve 6 the fixed quantity of water is injected into the step cylinder at a fixed speed. It is impossible that the piston of the hydraulic step cylinder jumps unexpectedly with an injection of an excessive quantity of water.

To ensure that the lowest flow $Q_0$ is small enough a seal must be set between piston and cylinder. But usual sealing materials such as rubber, plastic and so on cannot work, because the cylinder is near the reactor core where the temperature and radio-level are very high, so the untouched seal such as a gap seal or labyrinth seal is used, and the seal material is graphite or stainless steel.

The position of the cylinder is determined by the ultrasonic system. The ultrasonic sensor can work in conditions of high temperature, high pressure and high radio-level. It is accurate within ±3 mm. A number of ceraminators are set in the sensor, only at least two ceraminators give the same signals, the system can operate normally.

Comparing with the "hydraulic control rod" of KWU, this invention has the following advantages: the step length is smaller; the properties of regulation are better; the load per unit of area of the cylinder is higher; the cycle flow is smaller; the safety is better; it is impossible that the control rod jumps out of the cone unexpectedly. In the main, its properties achieve the technical requirements of a control rod.

The structure of the invention is simple, its cost is only 1/8 to 1/10 of the usual magnetic lifter used in a PWR. The invention will reduce the reactor scale, will simplify the reactor structure and will improve the reactor safety when used in the reactor.

The exploitive example:

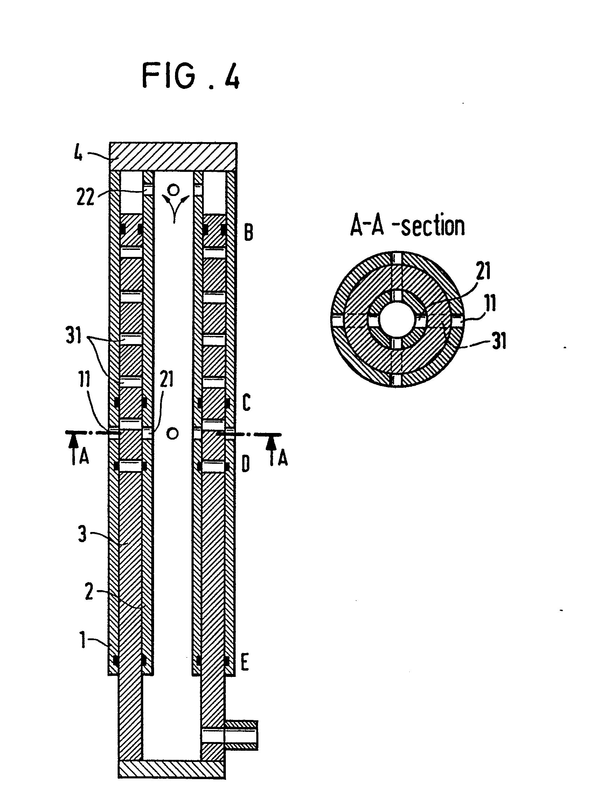

The principle of the orifice-type of hydraulic step cylinder is shown in Fi Fig. 4, in which 1 is an outer tube, 2 is an inner tube, 3 is a cylinder, 4 is a joint.

On the basis of the above-mentioned principle, a hydraulic step cylinder of orifice type was built at the Institute of Nuclear Energy Technology of Isinghua University (INET); its principle is shown in Fig. 4.

The outer tube 1, the inner tube 2 and the joint 4 are joined and form the piston; the cylinder 3 is standing. There are four lines of orifices in the cylinder which are long-round. Crosswise, four orifices in every row are arranged evenly in a round which is perpendicular to the axis of the cylinder; the distance between two rows is equal to a step length. Each line of orifices is arranged in a straight line which is parallel with the axis of the cylinder. In the middle of the outer tube 1 and the inner tube 2 there are four orifices each, which are arranged evenly in a round that is perpendicular to the axis of the cylinder. Corresponding orifices in the outer tube and the inner tube must coincide. When the piston is fitted with the cylinder, the axes of corresponding orifices must coincide (Fig. 4, section A-A). In the top of the inner tube 2 there are four further holes which are used for linking up the inner and the outer tubes and for increasing the effective area of the piston. There are seal sets B in the top of the cylinder 3 and other seal sets C, D and E in the middle of the outer tube 1 and the inner tube 2 as well as in the end of the outer and the inner tubes. The seal material is stainless steel.

It was proven by experiment that the properties are better than those of the "hydraulic control rod" of KWU. The comparison between both is as follows:

|  | INET | KWU |
| --- | --- | --- |
| Step-length (cm) | 1.5 - 2.0 | 5.0 |
| Pressure of the cylinder (bar) | 1.8 - 2.2 | 1.5 |
| the water consumption T/h | 0.35 - 0.45 | 3.6 |
| reliability | it is impossible to have the accident of unexpected withdrawal of the control rod | it is possible to have the accident of unexpected withdrawal of the control rod |

Claims

1. A hydraulic step cylinder for driving the control rod of a reactor, comprising a cylinder (3) and a hollow piston (1, 2, 4), characterised in that in the wall of the cylinder (3) there are more than two lines of orifices (31), each line of orifices (31) is arranged in a straight line which is parallel to the axis of the cylinder, crosswise these orifices (31) are arranged in rows, in each row the orifices (31) are arranged evenly in a round which is perpendicular to the axis of the cylinder (3), the distance between two near rows is the step length, that one row of orifices (11, 21) is arranged in the side wall of the piston, the axes of the orifices (11, 21) coincide with the axes of corresponding orifices (31) of the cylinder (3), that a gap seal and labyrinth are set between the piston (1, 2, 4) and the cylinder (3) and that said hydraulic step cylinder still includes a pulse valve (8) which consists of a cylinder (15) that includes a large cylinder and a small cylinder and a piston (14) that consists of two corresponding pistons.

2. A hydraulic step cylinder as claimed in claim 1, characterised in that the shape of the orifices (11, 21) of the piston (1, 2) can be round or rectangular or any other shape, the axial dimension of the orifices (31) of the cylinder (3) is longer than the axial dimension of the orifices (11, 21) of the piston (1, 2).

3. A hydraulic step cylinder as claimed in claim 1 or claim 2, characterised in that the hollow piston includes an inner piston (2) and an outer piston (1) connected at the top end by a plate (4), that the cylinder (3) has the form of a tube with an upper open end and is sealedly arranged between the inner and outer pistons (2, 1), and that a set of openings (22) is disposed in the inner piston (2) near its upper closed end.

4. A hydraulic step cylinder as claimed in claim 3, characterised in that the orifices (11, 21) disposed at least in the middle portion of the inner and outer pistons (2, 1) are respectively arranged on the same axis.

5. A hydraulic step cylinder as claimed in claim 3 or claim 4, characterised in that an inner and outer seal ring (B) are disposed in the upper end portion of the cylinder (3) and that further seal rings (C, D, E) are disposed in the inner and outer pistons (2, 1) near the lower end portion and on both sides of the orifices (11, 21), respectively.

FIG.1

FIG.2

FIG.3

# FIG . 4

A-A -section

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 445 334 (J.R. HUMPHRIES, JR.) * Abstract; column 6, lines 50-57; figure 3 * | 1 | G 21 C 7/16 F 15 B 11/12 |
| A | DE-A-1 900 410 (AKTIEBOLAGET ATOMENERGIE) * Page 8, lines 1-16; figure 1 * | 1 | |
| A | US-A-4 014 248 (L. CYROT) * Abstract; figure 4 * | 1 | |
| A | US-A-3 732 892 (T. BUBULA) | | |
| | ----- | | |

**TECHNICAL FIELDS SEARCHED (Int. Cl.4)**

G 21 C 7/00
F 15 B 11/00

The present search report has been drawn up for all claims

| Place of search | Date of completion of the search | Examiner |
|---|---|---|
| THE HAGUE | 25-06-1986 | ERRANI C. |